# EUROPEAN PATENT SPECIFICATION

(11) **EP 0 649 284 B1**
(45) Date of publication and mention of the grant of the patent: **18.10.2000**
(21) Application number: 93909817.4
(22) Date of filing: 05.05.1993
(51) Int. Cl.: A23C 11/00, A23C 9/12, A23J 3/08, A23L 1/305

(54) **USE OF A MILK LIKE PRODUKT AS A FAT REPLACER FOR FOODS**
VERWENDUNG EINES MILCHÄHNLICHEN PRODUKTES ALS FETTERSATZ IN NAHRUNGSMITTELN
UTILISATION D'UN PRODUIT SIMILAIRE A UN PRODUIT LAITIER COMME REMPLACEMENT DES MATIERES GRASSES DANS LES ALIMENTS

(30) Priority: 08.05.1992 DK 60192
(43) Date of publication of application: 26.04.1995
(73) Proprietor: NOVO NORDISK A/S, 2880 Bagsvaerd (DK)
(72) Inventor: NIELSEN, Per Munk, DK-3400 Hillerod (DK); PETERSEN, Bent Riber, DK-2100 Kobenhavn O (DK); BUDOLFSEN, Gitte, DK-2000 Frederiksberg (DK)
(86) International application number: DK9300152
(87) International publication number: WO9322930

(56) References cited:
- DE-C- 181 918
- Dialog Information Service, File 351, WPIL, Dialog Accession No. 00874421, WPI Accession No. 91-248437/34, (AJIN): "Food Material contg. Denaturated Milk Proteins - obtd. by Treating liq. contg. Milk Proteins with Trans-Glutaminase, Heating and Drying"; & JP,A,03 160 957, publ. 910710.
- Dialog Information Service, File 50, CAB, Dialog Accession No. 1258838, CAB Accession No. 0D054-03006, RAO, D.S.: "Enzymatic Modification of Milk Proteins During Processing - a Possible Role for Native Milk Proteinase", Indian Dairyman (1991) 43 (11), p. 514-517.
- Dialog Information Service, File 351, WPIL, Dialog Accession No. 008465483, WPI Accession No. 90-352483/47, (AJIN): "Minced Meat and Fish Paste - Contains Soybean Protein and/or Milk Protein and Transglutaminase"; & JP,A,02 255 060, publ. 901015.

## Description

The present invention concerns a use of a milk like product as a fat replacer for foods.

In this specification with claims a milk like product is to be understood as comprising a product produced with a liquid containing milk proteins from an animal source as a starting material, examples of liquids containing milk proteins from an animal source being cow milk, buffalo milk, goat milk, sheep milk, and animal milk fortified with casein.

Thus, the purpose of the invention is the provision of a new use of a milk like product as a fat replacer for foods, which gives rise to foods which exhibit a reduced fat content and which exhibit the same good organoleptic properties as the corresponding fat containing nutrient.

Surprisingly, according to the invention it has been found that a milk like product produced by adding transglutaminase to a liquid containing milk proteins, which liquid contains Ca⁺⁺, if required, in an amount sufficient for the reaction catalyzed by the transglutaminase, and whereby the pH of the liquid, if required, is adjusted to a value of between 5.5 and 7.5, can be used as a fat replacer for foods.

Typical examples of foods, in which the milk like product can be incorporated as a fat replacer, are ice cream, toppings, frozen desserts, dressings, mayonnaises and low fat spreads. As a consequence of this use it is possible to produce foods which have a reduced calorie content, and which still possess organoleptic properties similar to the organoleptic properties of foods with a normal fat content.

It is known that milk is physically unstable to protease attack, forming a coagulum after exposure to proteases, e.g. rennet. This is a desirable property in regard to cheese production. In other cases, however, this property is undesirable, especially in relation to long term storage stability of UHT milk. Even if the microorganisms are killed during the UHT treatment, thermostable proteases produced by certain microorganisms may not be completely inactivated during the UHT treatment, and in such cases the UHT milk is physically unstable during long term storage. However, the milk like product used as a fat replacer for foods according to the invention is extremely stable. Documentation will be presented later in this specification. Especially it has been found that the fat replacer used according to the invention, if UHT treated, exhibits a satisfactory long term physical storage stability.

If according to the invention cow milk is used as the liquid containing milk proteins it has been found that the milk like product used as the fat replacer for foods according to the invention exhibits an excellent physical stability to protease attack.

The amount of transglutaminase to be added depends on the reaction time. If the reaction time is long, e.g. 2 hours, very little transglutaminase is necessary in order to generate the stability.

From Japanese unexamined patent application no. JP-A-3160957 it appears that a material containing novel modified milk protein can be obtained by letting transglutaminase act on a liquid product containing milk protein, and by subsequent heating and drying. Also, it appears that the object of the Japanese invention is the provision of a product, which is able to form a gel on heating. However, it does not appear from the Japanese citation that the product can be used as a fat replacer, and in fact it cannot.

Dialog Information Service, File 50 CAB, Dialog accession no. 1258838, CAB accession No. OD054-03006, and Indian Dairyman (1991), 43 (11), page 514-517 discloses a method for enzymatic modification of milk proteins, whereby an example illustrates transglutaminase catalyzed acyl transfer reaction. Thus, this technical literature describes a milk like product similar to the milk like product used as the fat replacer for foods according to the invention for foods, but nowhere in this technical literature an indication can be found that the described milk like product can be used as a fat replacer for foods.

A preferred embodiment of the use according to the invention is characterized by the fact that the transglutaminase is of human, of bovine or of microbial origin. In this manner the fat replacer produced according to the invention can be obtained in an economically sound manner.

A preferred embodiment of the use according to the invention is characterized by the fact that the transglutaminase is activated factor XIII. In this manner the fat replacer can be obtained in an economically sound manner.

A preferred embodiment of the use according to the invention is characterized by the fact that the liquid containing milk proteins is milk from domestic animals, preferably from cows. This is a cheap and easily available starting material for the fat replacer used according to the invention.

A preferred embodiment of the use according to the invention is characterized by the fact that an enzyme with milk clotting activity is added to the liquid containing milk proteins. This embodiment, which is illustrated in Example 4, comprises only the cases, in which a milk like product is produced. If for instance the enzyme with milk clotting activity is added ample time before the addition of transglutaminase, a cheese like product is produced, and thus, this case is outside the scope of the invention. Surprisingly, it has been found that this embodiment inside the scope of the invention gives rise to a special milk like product, i.e. a milk like product with microparticulated protein, aggregated by means of the enzyme with milk clotting activity. This milk like product exhibits a mouth feeling like a fat emulsion. Similar milk like products with microparticulated protein is described in WO 91/17665 and EP 468,560. However, the product described in WO 91/17665 often gets a burned taste due to the necessary heat treatment, and the method described in EP 468,560 involves a time consuming fermentation process, which is not performed during the production of the fat replacer used according to the invention.

A preferred embodiment of the use according to the invention is characterized by the fact that an enzyme with milk clotting activity is added to a casein solution. In this manner a lactose free milk like product is produced. It can be used in all cases, where the presence of lactose in the fat replacers should be avoided.

A preferred embodiment of the use according to the invention is characterized by the fact that the enzyme with milk clotting activity is a cheese rennet enzyme. This enzyme is commercially easily available.

### EXAMPLE 1

As a starting material 200 ml of whole cow milk was used. Ca⁺⁺ as CaCl₂ was added to a concentration of 5 mM Ca⁺⁺. The pH was adjusted to 6.7, and the temperature was adjusted to 32°C. Transglutaminase was added as 30 mg of activated factor XIII. Also, a control experiment without transglutaminase was carried out. This mixture was left alone for 30 minutes. Subsequently 0.12 g of Rennilase® 14XL rennet was added to the mixture. A heavy clotting took place in the control, but no clotting took place in the milk like product useable as a fat replacer, according to the invention. This milk like product useable as a fat replacer can now be incorporated in any food, according to the invention.

### EXAMPLES 2 AND 3

Example 1 was repeated, except for the fact that the addition of factor XIII and the rennet was performed simultaneously (Example 2), and except for the fact that the additions of factor XIII and the rennet were reversed, whereby the addition of factor XIII was carried out immediately after the addition of rennet (Example 3). Also in these cases a heavy clotting took place in the control, but no clotting took place in the milk like product useable as a fat replacer, according to the invention. This milk like product useable as a fat replacer can now be incorporated in any food, according to the invention.

### EXAMPLE 4

As a starting material 100 ml of skim milk of 32°C was used, and Ca⁺⁺ was added to a total concentration of 5 mM. The pH-value was adjusted to 6.7. Rennilase® (an enzyme with milk clotting activity) was added in a concentration of 6.5 RU/ml, the RU unit being defined in IB 67/3-e (a Novo Nordisk product information sheet, available upon request from Novo Nordisk A/S, Novo Allé, DK-2880 Bagsvaerd, Denmark). After 5 seconds activated factor XIII was added in a concentration of 0.4% w/w, based on the protein content. A milk like product with microparticulated protein and with a mouth feeling like a fat emulsion was produced. This milk like product useable as a fat replacer can now be incorporated in any food, according to the invention.

## Claims

1. Use of a milk like product produced by adding transglutaminase to a liquid containing milk proteins, as a fat replacer for foods.

2. The use according to claim 1, wherein the liquid containing milk proteins contains Ca⁺⁺, if required, in an amount sufficient for the reaction catalyzed by the transglutaminase.

3. The use according to any one of claims 1-2, wherein the pH of the liquid containing milk proteins, if required, is adjusted to a value of between 5.5 and 7.5.

4. The use according to any one of claims 1-3, wherein an enzyme with milk clotting activity is added to the liquid containing milk proteins.

5. The use according to any one of claims 1-4, wherein the transglutaminase is of human, of bovine or of microbial origin.

6. The use according to any one of claims 1-5, wherein the transglutaminase is activated factor XIII.

7. The use according to any one of claims 1-6, wherein the liquid containing milk proteins is milk from domestic animals, preferably from cows.

8. The use according to any one of claims 1-7, wherein the liquid containing milk proteins is a casein solution.

9. The use according to any one of claims 4-8, wherein the enzyme with milk clotting activity is a cheese rennet enzyme.

## Patentansprüche

1. Verwendung eines milchähnlichen Produkts als Fettersatzstoff für Nahrungsmittel, hergestellt durch Zufügen von Transglutaminase zu einer Flüssigkeit enthaltend Milchproteine.

2. Verwendung gemäß Anspruch 1, wobei die Flüssigkeit enthaltend Milchproteine Ca⁺⁺, wenn benötigt, in ausreichender Menge für die durch die Transglutaminase-katalysierte Reaktion, enthält.

3. Die Verwendung gemäß einem der Ansprüche 1-2, wobei der pH der Flüssigkeit enthaltend Milchproteine, wenn benötigt, auf einen Wert zwischen 5,5 und 7,5 eingestellt wird.

4. Die Verwendung gemäß einem der Ansprüche 1-3, wobei das Enzym mit Milchgerinnungsaktivität zu der Flüssigkeit enthaltend Milchproteine zugesetzt wird.

5. Die Verwendung gemäß einem der Ansprüche 1-4, wobei die Transglutaminase menschlicher, Rinder- oder mikrobieller Herkunft ist.

6. Die Verwendung gemäß einem der Ansprüche 1-5, wobei die Transglutaminase aktivierter Faktor XIII ist.

7. Die Verwendung gemäß einem der Ansprüche 1-6, wobei die Flüssigkeit enthaltend Milchproteine Milch von Haustieren, bevorzugterweise von Kühen ist.

8. Die Verwendung gemäß einem der Ansprüche 1-7, wobei die Flüssigkeit enthaltend Milchproteine eine Kaseinlösung ist.

9. Die Verwendung gemäß einem der Ansprüche 4-8, wobei das Enzym mit Milchgerinnungsaktivität ein Käselabenzym ist.

## Revendications

1. Utilisation d'un produit similaire à un produit laitier produit par addition de transglutaminase à un liquide contenant les protéines du lait, comme produit de remplacement de matières grasses pour des aliments.

2. Utilisation selon la revendication 1, dans laquelle le liquide contenant des protéines du lait contient Ca⁺⁺, au besoin, dans une quantité suffisante pour la réaction catalysée par la transglutaminase.

3. Utilisation selon l'une quelconque des revendications 1-2, dans laquelle le pH du liquide contenant les protéines du lait, au besoin, est ajusté à une valeur entre 5,5 et 7,5.

4. Utilisation selon l'une quelconque des revendications 1-3, dans laquelle on ajoute une enzyme avec une activité de coagulation du lait au liquide contenant les protéines de lait.

5. Utilisation selon l'une quelconque des revendications 1-4, dans laquelle la transglutaminase est d'origine humaine, bovine ou microbienne.

6. Utilisation selon l'une quelconque des revendications 1-5, dans laquelle la transglutaminase est le facteur XIII activé.

7. Utilisation selon l'une quelconque des revendications 1-6, dans laquelle le liquide contenant les protéines de lait est le lait provenant d'animaux domestiques, de préférence de vaches.

8. Utilisation selon l'une quelconque des revendications 1-7, dans laquelle le liquide contenant les protéines du lait est une solution de caséine.

9. Utilisation selon l'une quelconque des revendications 4-8, dans laquelle l'enzyme ayant une activité de coagulation du lait est une enzyme de présure de fromage.
